# EUROPEAN PATENT APPLICATION

(11) **EP 1 541 945 A2**
(43) Date of publication of application: **15.06.2005**
(21) Application number: 04106337.1
(22) Date of filing: 06.12.2004
(51) Int. Cl.: F25D 17/06, F25D 17/04

(54) **A Refrigerator**

(30) Priority: 11.12.2003 KR 2003090283
(71) Applicant: Samsung Electronics Co., Ltd., Suwon, Gyeonggi-do 442-742 (KR)
(72) Inventor: Lee, Jung-hoon, Kwangju (KR); Lee, Jong-dal, Kwangju (KR)
(74) Representative: Geary, Stuart Lloyd

(57) **Abstract**

A refrigerator including an auxiliary storage provided in a main body; an auxiliary supply duct, branched off from one of a freezer compartment main duct and a refrigerator compartment main duct, to supply the cooling air transferred by a corresponding fan to a auxiliary storage; an auxiliary returning duct returning the cooling air in the auxiliary storage to a corresponding main duct; and an auxiliary damper in at least one of the auxiliary supply duct and the auxiliary returning duct, to open and close to respectively supply and block the cooling air to the auxiliary storage.

## Description

The present invention relates to a refrigerator comprising a first compartment for freezing or refrigeration; an auxiliary compartment, such as a crisper or vegetable compartment; and a heat pump for providing cooled air to the first and second compartments

A refrigerator comprises a main body having a refrigerator compartment and a freezer compartment; doors, installed on the main body, to open and close the refrigerator and the freezer compartment, respectively; a compressor; a condenser, and an evaporator.

A known refrigerator which cools the freezer and refrigerator compartments independently comprises: a main body which forms a freezer compartment and a refrigerator compartment where each of a freezer compartment main duct and a refrigerator compartment main duct include at least one exiting hole and one returning hole which communicate with the freezer compartment and the refrigerator compartment, respectively. A freezer compartment evaporator and a refrigerator compartment evaporator are located in the freezer compartment main duct and in the refrigerator compartment main duct, respectively to generate cooling air. A freezer compartment fan and a refrigerator compartment fan are located in the freezer compartment main duct and in the refrigerator compartment main duct, respectively, which passes the cooling air generated from the freezer compartment evaporator and the refrigerator compartment evaporator, respectively, through the exiting hole and sucks the cooling air into the freezer compartment and the refrigerator compartment through the returning hole.

Therefore, the cooling air generated by the freezer compartment evaporator is transferred using the freezer compartment fan and passed into the freezer compartment through the exit hole formed on a surface of the freezer compartment main duct. The cooling air thus circulates in the freezer compartment. The cooling air within the freezer compartment re-circulates back into the freezer compartment evaporator through the returning hole on the surface of the freezer compartment main duct.

The cooling air generated by the refrigerator compartment evaporator is transferred by the refrigerator compartment fan, and cools the refrigerator compartment independently.

In the known refrigerator, auxiliary storage provides additional storage for items such as vegetables. The known refrigerator supplies the cooling air from the exit hole formed in the freezer compartment and the refrigerator compartment to the auxiliary storage with a cooling air supplying fan as disclosed in KR-U- 1998-11513.

However, in such case, there exists a problem that the temperature of the auxiliary storage cannot be controlled independently and the temperature of the auxiliary storage depends on a temperature of the freezer compartment or the refrigerator compartment.

Also, the cooling air in the freezer compartment or the refrigerator compartment leaks into the auxiliary storage, thereby decreasing the cooling efficiency of the freezer compartment or the refrigerator compartment.

Accordingly, an aspect of the present invention provides a refrigerator and a method of controlling the same to cool an auxiliary storage efficiently.

The present invention relates to a refrigerator comprising a first compartment for freezing or refrigeration; an auxiliary compartment, such as a crisper or vegetable compartment; and a heat pump for providing cooled air to the first and second compartments.

A refrigerator, according to the present invention, is characterised in that the flow of cooled air from the heat pump to the auxiliary compartment is controllable independently of the flow of cooled air from the heat pump to said first compartment.

Additional preferred and optional features are set forth in claims 2 to 8 appended hereto

An embodiment of the present invention will now be described, by way of example only, and with reference to the accompanying drawings, in which:
Figure 1 is a schematic front view of a refrigerator according to a first embodiment of the present invention;
Figure 2 is a schematic front view of a refrigerator according to a second embodiment of the present invention;
Figure 3 is a schematic front view of a refrigerator according to a third embodiment of the present invention;
Figure 4 is a control block diagram of the refrigerator according to the first and the second embodiments of the present invention;
Figure 5 is a control block diagram of the refrigerator according to the third embodiment of the present invention
Figure 6 is a timing diagram illustrating the digital state of each component during a cooling cycle of the refrigerator according to the first and the second embodiment of the present invention;
Figure 7 is a timing diagram illustrating the digital state of each component during a cooling cycle of the refrigerator according to the third embodiment of the present invention;
Figure 8 is a control flow chart of the refrigerator according to the first and second embodiments of the present invention;
Figure 9 is a control flow chart of the refrigerator according to the third embodiment of the present invention.

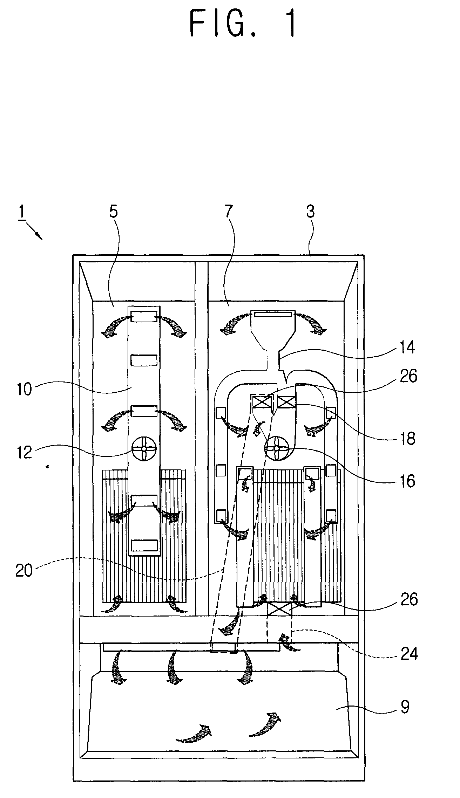

Referring to Figure 1, a first refrigerator 1 according to the present invention comprises: a main body 3 forming a freezer compartment 5 on a left side and a refrigerator compartment 7 on a right side; a freezer compartment main duct 10 and a refrigerator compartment main duct 14 provided on rear surfaces of the freezer compartment 5 and the refrigerator compartment 7 of the main body 3, respectively. The freezer compartment main duct 10 and the refrigerator compartment main duct 14 each comprise at least one exiting hole and one returning hole; a freezer compartment evaporator (not shown) and a refrigerator compartment evaporator (not shown) installed in the freezer compartment main duct 10 and in the refrigerator compartment main duct 14, respectively, to generate cooling air; a freezer compartment fan 12 and a refrigerator compartment fan 16 to transfer the cooling air, generated by the freezer compartment evaporator and the refrigerator compartment evaporator to the freezer compartment 5 and the refrigerator compartment 7, respectively, and to re-circulate the cooling air which is in the freezer compartment 5 and the refrigerator compartment 7 back into the freezer compartment evaporator and the refrigerator compartment evaporator, respectively; and a refrigerator compartment damper 18 provided on a top end of the refrigerator compartment main duct 14.

The refrigerator 1 further comprises auxiliary storage 9 (such as vegetable storage or a crisper), included at the bottom of both the freezer compartment 5 and the refrigerator compartment 7, is partitioned by a wall. An auxiliary supply duct 20, branched off from the refrigerator compartment main duct 14, supplies the cooling air transferred by the refrigerator compartment fan 16 to the auxiliary storage 9. An auxiliary returning duct 24 transfers the cooling air from the auxiliary storage 9 to the refrigerator compartment evaporator in the refrigerator compartment main duct 14. Auxiliary dampers 26 in the auxiliary supply duct 20, and the auxiliary returning duct 24, as well as the refrigerator compartment damper 18, may be opened and closed so that the cooling air can be supplied to, and stopped from being supplied to, the refrigerator compartment 7 and the auxiliary storage 9.

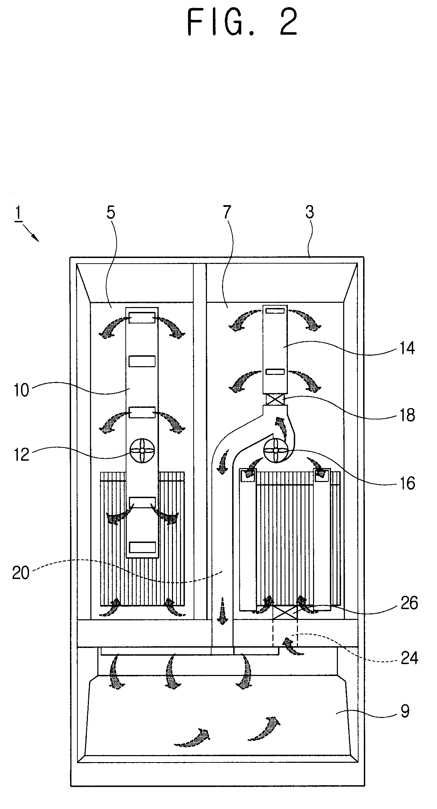

Referring to Figure 2, the configuration of second refrigerator 1 according to the present invention is similar to that of the first refrigerator 1.

While the first refrigerator 1 is provided with the respective auxiliary dampers 26 in the auxiliary supply duct 20 and the auxiliary returning duct 24, the second refrigerator 1 is provided with an auxiliary damper 26 only in the auxiliary returning duct 24.

With the second refrigerator 1, even if the cooling air is supplied through the auxiliary supply duct 20, the cooling air will not return to the refrigerator compartment evaporator and will not circulate as long as the auxiliary damper 26 is in a closed state. Accordingly, the pressure within the auxiliary storage 9 increases so that the cooling air does not flow into the auxiliary storage 9.

Also, it is possible to provide the auxiliary damper 26 only in the auxiliary supply duct 20, unlike the embodiments described above.

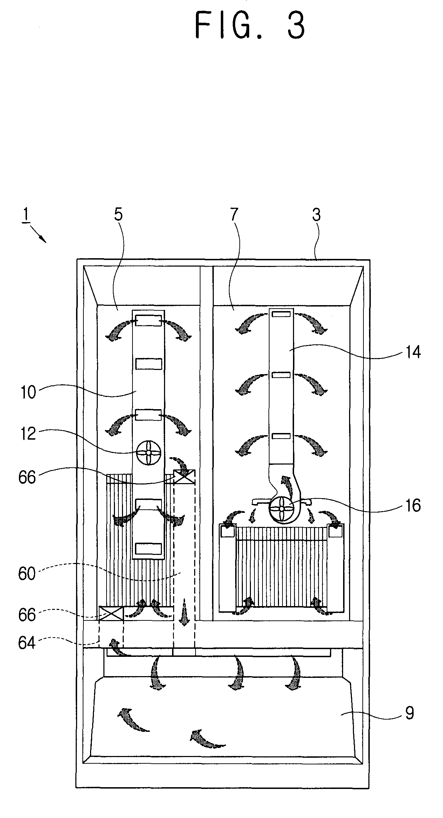

Referring to Figure 3, a third refrigerator 1 according to the present invention comprises: the auxiliary storage 9 located towards the bottom of the freezer compartment 5 and the refrigerator compartment 7. The auxiliary storage 9 is formed by a partitioned wall; the auxiliary supply duct 60, branched off from the freezer compartment main duct 10, which supplies the cooling air, transferred by the freezer compartment fan 12, to the auxiliary storage 9; the auxiliary returning duct 64 to return the cooling air, which is in the auxiliary storage 9, back to the freezer compartment evaporator of the freezer compartment main duct 10; and the auxiliary dampers 66 located in the auxiliary supply duct 60 and the auxiliary returning duct 64, respectively.

In the third refrigerator 1, the auxiliary supply duct 60, the auxiliary returning duct 64 and the auxiliary damper 66 are included in the freezer compartment 5.

Although the dampers 66 are included in the auxiliary supply duct 60 and the auxiliary returning duct 64 in this example, it is understood that the auxiliary damper 66 may be provided in either the auxiliary supply duct 60 or the auxiliary returning duct 64.

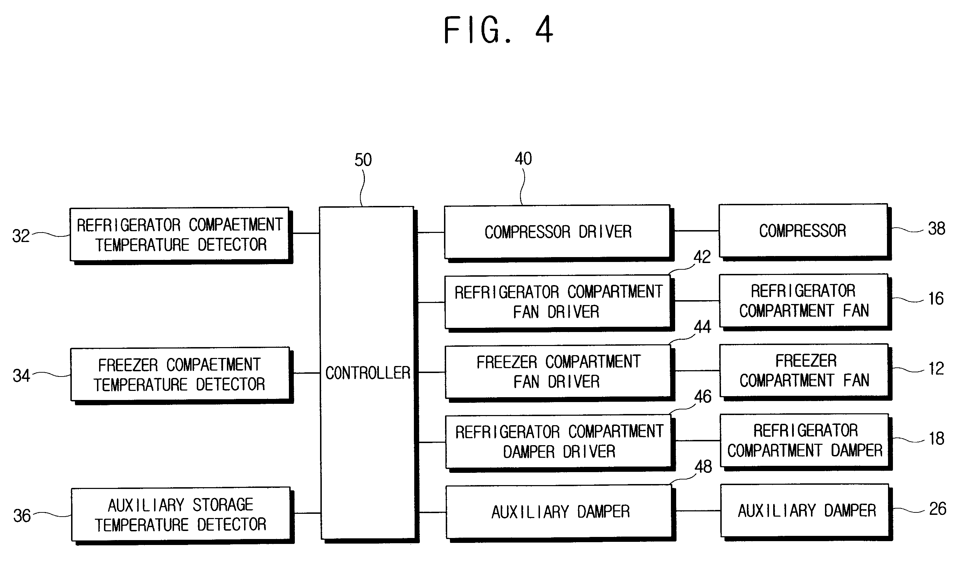

Referring to Figure 4, the refrigerators 1 also comprise: a refrigerator compartment temperature detector 32, a freezer compartment temperature detector 34, and an auxiliary storage temperature detector 36 to detect temperatures in the refrigerator compartment 7, the freezer compartment 5, and the auxiliary storage 9, respectively; a compressor driver 40 to drive a compressor 38; a refrigerator compartment fan driver 42 and a freezer compartment fan driver 44, which drive the refrigeration compartment fan 16 and the freezer compartment fan 12, respectively; a refrigerator compartment damper driver 46 and an auxiliary damper driver 48 to drive the refrigerator compartment damper 18 and the auxiliary damper 26, respectively; a controller 50 controlling the compressor driver 40, the refrigerator compartment fan driver 42, the freezer compartment fan driver 44, the refrigerator compartment damper driver 46, and the auxiliary damper driver 48 based on results detected by the temperature detectors 32, 34, and 36 in the respective compartments.

The controller 50 determines whether each of the compartments require cooling. This is in accordance with the temperatures of the respective compartments which are detected by the refrigerator compartment temperature detector 32, the freezer compartment temperature detector 34, and the auxiliary storage temperature detector 36, respectively.

The controller 50 compares the freezer compartment temperature, which is detected by the freezer compartment temperature detector 34, to a freezer compartment pre-set (or desired) temperature. If the detected freezer compartment temperature is higher than the pre-set temperature, the controller 50 controls the compressor driver 40 and the freezer compartment fan driver 44 to drive the compressor 38 and the freezer compartment fan 12, respectively, which will cool the freezer compartment 5.

Meanwhile, the controller 50 compares the refrigerator compartment temperature detected by the refrigerator compartment temperature detector 32 and against the refrigerator compartment pre-set (or desired) temperature. If the detected refrigerator compartment temperature is higher than the refrigerator compartment pre-set temperature, the controller 50 controls the compressor driver 40 and the refrigerator compartment fan driver 42 to drive the compressor 38 and the refrigerator compartment fan 16, respectively to cool the refrigeration compartment 7. Also, the controller 50 controls the refrigerator compartment damper driver 46 and auxiliary damper driver 48 to open the refrigerator compartment damper 18 and to close the auxiliary damper 26, respectively, so that the temperature of the refrigerator compartment 7 reaches the pre-set temperature.

If the temperature of the refrigerator compartment 7 is determined to be the pre-set temperature but the detected auxiliary storage temperature is higher than the auxiliary storage pre-set temperature, the controller 50 controls the refrigerator compartment damper driver 46 and the auxiliary damper driver 48 to close the refrigerator compartment damper 18 and to open the auxiliary damper 26, respectively.

Accordingly, the cooling air, which is generated in the refrigerator compartment evaporator, is supplied to the auxiliary storage 9 through the auxiliary supply duct 20, and the cooling air from within the auxiliary storage 9 returns to the refrigerator compartment evaporator through the auxiliary returning duct 24. Accordingly, the auxiliary storage 9 is cooled using the cooling air generated in the refrigerator compartment evaporator.

Also, once the auxiliary storage temperature detected by the auxiliary storage temperature detector 36 is at the auxiliary storage pre-set temperature, the controller 50 controls the refrigerator compartment fan driver 42 to stop the driving of the refrigerator compartment fan 16, and controls the refrigerator compartment damper driver 46 and the auxiliary damper driver 48 to close the refrigerator compartment damper 18 and the auxiliary damper 26, respectively. This stops the cooling air from being supplied to the auxiliary storage 9.

Also, after the auxiliary storage temperature is at the desired temperature, the controller 50 determines whether the freezer compartment temperature detected by the freezer compartment temperature detector 34 is at the pre-set temperature. If the freezer compartment temperature is at the pre-set temperature, the controller 50 controls the compressor driver 40 and the freezer compartment fan driver 44 to stop the driving of the compressor 38 and the freezer compartment fan 12 so that the cooling operation is terminated.

After the termination of the cooling operation, a frost removal cycle is implemented. The frost removal cycle is implemented by driving the refrigerator compartment fan 16 for a predetermined period of time after the compressor 38 has stopped driving, and opening the refrigerator compartment damper 18, and closing the auxiliary damper 26. With the frost removal cycle, any cooling air left in the refrigerator compartment evaporator, which remains after the compressor 38 stops driving, flows into the refrigerator compartment 7 This improves cooling efficiency. Also, frost is removed without needing to use a frost removal heater (not shown).

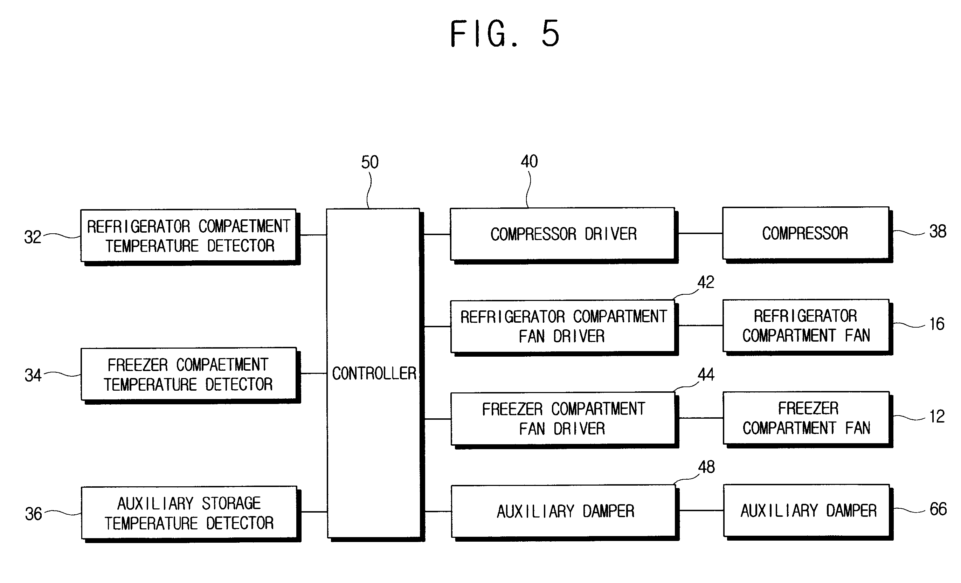

Referring to Figure 5, the refrigerator according to the third embodiment comprises: the refrigerator compartment temperature detector 32, the freezer compartment temperature detector 34, and the auxiliary storage temperature detector 36 to detect temperatures in the refrigerator compartment 7, the freezer compartment 5, and the auxiliary storage 9, respectively; the compressor driver 40 to drive the compressor 38; the refrigerator compartment fan driver 42 and the freezer compartment fan driver 44 to drive the refrigerator compartment fan 16 and the freezer compartment fan 12, respectively; the auxiliary damper driver 48 to drive the auxiliary damper 66; and the controller 50 to control the compressor driver 40, the refrigerator compartment fan driver 42, the freezer compartment fan driver 44, and the auxiliary damper driver 48 in accordance with the temperatures detected by the temperature detectors 32, 34, and 36 in the respective compartments.

The controller 50 determines whether each compartment requires a cooling operation in accordance with the temperatures of the respective compartments. The temperatures are detected by the freezer compartment temperature detector 34, the refrigerator compartment temperature detector 32, and the auxiliary storage temperature detector 36. Also, the controller 50 provides control signals so that the freezer compartment 5 and the refrigerator compartment 7 are cooled individually based on the temperatures of the respective compartments.

If the auxiliary storage temperature detected by the auxiliary storage temperature detector 36 is higher than the auxiliary storage pre-set (desired) temperature, the controller 50 controls the auxiliary damper driver 48 to open the auxiliary damper 66.

Accordingly, the cooling air generated in the freezer compartment evaporator is supplied to the auxiliary storage 9 through the auxiliary supply duct 60. The cooling air in the auxiliary storage 9 returns to the freezer compartment evaporator through the auxiliary returning duct 64. Accordingly, the auxiliary storage 9 is cooled by the cooling air which is generated in the freezer compartment evaporator.

Also, once the auxiliary storage temperature detected by the auxiliary storage temperature detector 36 is at the auxiliary storage pre-set temperature, the controller 50 controls the auxiliary damper driver 48 so that the auxiliary damper 66 is closed. Therefore the supply of the cooling air from the auxiliary storage 9 is stopped.

Therefore, temperature control of the auxiliary storage 9 is implemented using the cooling air generated in the freezer compartment evaporator. The temperature of the auxiliary storage 9 reaches the desired temperature first because the inner volume of the auxiliary storage 9 is smaller than that of the freezer compartment 5.

After completion of the cooling operation, the frost removal cycle is implemented. The frost removal cycle is implemented by driving the refrigerator compartment fan 16 for a time after the compressor 38 stops driving. With the frost removal cycle, residual cooling air in the refrigerator compartment evaporator, which remains after the compressor 38 stops driving, flows into the refrigerator compartment 7 and improves the cooling efficiency. The frost is removed without using the frost removal heater (not shown).

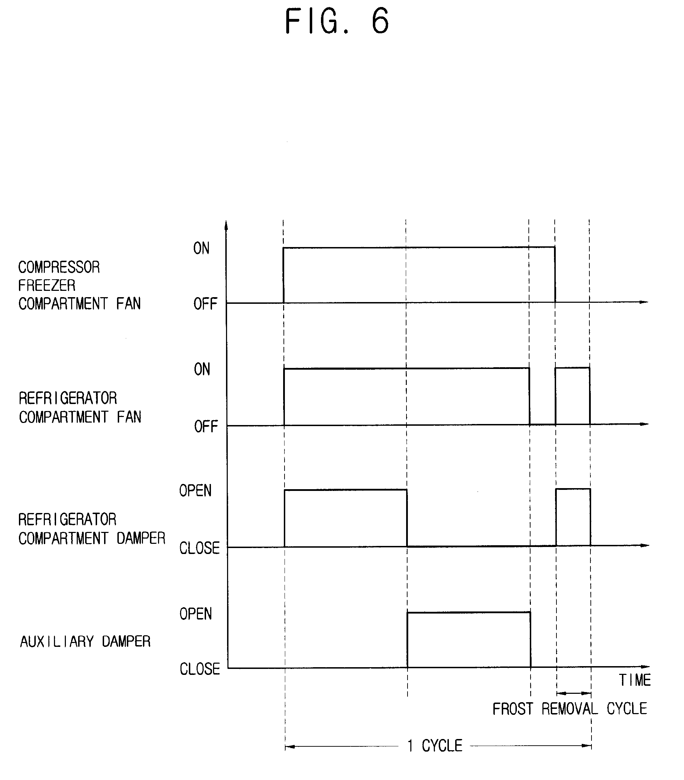

Referring to Figure 6, the compressor 38 and the freezer compartment fan 12 operate until the temperature of the refrigerator compartment 7, the auxiliary storage 9, and the freezer compartment 5 reach the respective pre-set (desired) temperatures and hence until the cooling cycle is completed. Meanwhile, the refrigerator compartment fan 16 operates while the refrigerator compartment 7 and the auxiliary storage 9 are cooled and while the frost is being removed.

The refrigerator compartment damper 18 is opened during the cooling of the refrigerator compartment 7 and during the frost removal cycle. The auxiliary damper 26 is opened while the auxiliary storage 9 is being cooled.

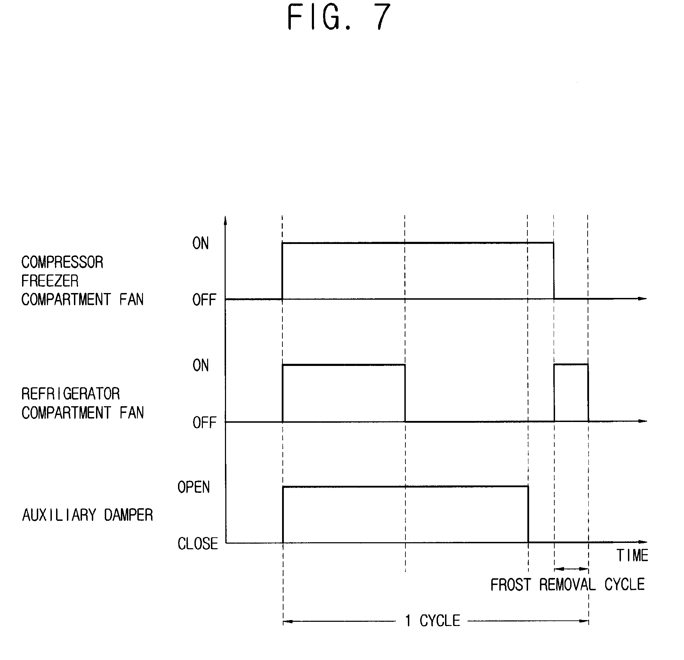

Referring to Figure 7, the compressor 38 and the freezer compartment fan 12 operate until the temperatures of the refrigerator compartment 7, the auxiliary storage 9, and the freezer compartment 5 reach the respective pre-set (desired) temperatures and hence the cooling cycle is completed. Meanwhile, the refrigerator compartment fan 16 operates while the refrigerator compartment 7 is cooled and while the frost is being removed. Also, the auxiliary damper 66 is opened while the auxiliary storage 9 is being cooled.

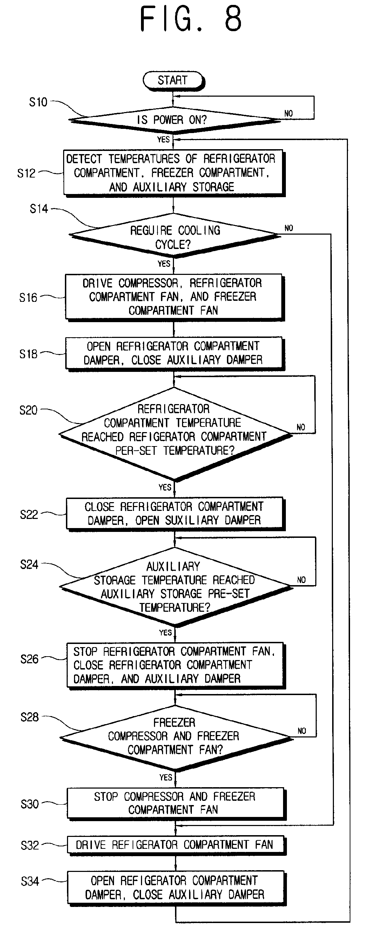

Referring to Figure 8, when the refrigerator 1 is "on", the controller 50 drives the respective components of the cooling cycle based on a previously stored operation program. Accordingly, the refrigerator compartment damper 18 and the auxiliary damper 26 are closed and the compressor 38, refrigerator compartment fan 16, and the freezer compartment fan 12 are stopped. This is shown as operation S10.

At operation S12, the controller 50 detects the refrigerator compartment temperature, the freezer compartment temperature, and the auxiliary storage temperature using the refrigerator compartment temperature detector 32, the freezer compartment temperature detector 34, and the auxiliary storage temperature detector 36, respectively.

At operation S14, the controller 50 determines whether any of the refrigerator compartment 7, the freezer compartment 5, and the auxiliary storage 9 require the cooling cycle. This is determined by comparing the refrigerator compartment temperature, the freezer compartment temperature, and the auxiliary storage temperature with the refrigerator compartment pre-set (desired) temperature, the freezer compartment pre-set (desired) temperature, and the auxiliary storage pre-set (desired) temperature, respectively.

If the refrigerator compartment temperature, the freezer compartment temperature or the auxiliary storage temperature is higher than the refrigerator, freezer or auxiliary storage compartment pre-set temperatures, respectively, the cooling cycle of the refrigerator compartment 7, the freezer compartment 5 or the auxiliary storage compartment 9 is required. This is determined by the controller 50.

However, as shown in the control flow chart in Figure 8, operation S16 follows operation S14 when all of the refrigerator compartment 7, the freezer compartment 5, and the auxiliary storage 9 require the cooling cycle to operate. However, if no cooling cycle is required, operation S32 follows operation S14. It will be understood that for brevity, the case of only the refrigerator compartment 7 or the auxiliary storage 9 requiring cooling, or the case of only the freezer compartment 5 requiring cooling is not illustrated in this example.

Also, if the refrigerator compartment 7 or the auxiliary storage 9 are determined to require the cooling cycle at operation S14, the compressor 38 and the refrigerator compartment fan 16 are driven. Similarly, if the freezer compartment 5 requires cooling at operation S14, the compressor 38 and the freezer compartment fan 12 are driven.

At operation S16, if the refrigerator compartment 7, the freezer compartment 5, and the auxiliary storage 9 are determined to require cooling, the controller 50 controls the compressor driver 40, the refrigerator compartment fan driver 42, and the freezer compartment fan driver 44 to drive the compressor 38, the refrigerator compartment fan 16, the freezer compartment fan 12, respectively.

Also, at operation S18, the controller 50 controls the auxiliary damper 26, which is initially closed, to be kept closed and the refrigerator compartment damper 18, which is initially closed to be opened. This allows the cooling air, which is transferred using the refrigerator compartment fan 16, to flow into the evaporator after circulating in, and thus cooling, the refrigerator compartment 7.

If the temperature detected by the refrigerator compartment temperature detector 32 is determined to be the pre-set temperature of the refrigerator compartment 7, the controller 50 controls the refrigerator damper 18 to be closed and the auxiliary damper 26 to be opened so that the cooling cycle of the auxiliary storage 9 is implemented at operations S20 and S22.

If the temperature of the auxiliary storage 9 is determined to have reached the pre-set temperature of the auxiliary storage 9, the controller 50 controls the refrigerator compartment fan 16 to stop and the refrigerator compartment damper 18 and the auxiliary damper 26 to close at operations S24 and S26.

Also, the controller 50 determines whether the temperature of the freezer compartment 5, which is individually cooled, is at the freezer compartment pre-set temperature at operation S28. If the freezer compartment temperature is at the pre-set temperature, the controller 50 controls the compressor 38 and the freezer compartment fan 12 to stop. Hence, the cooling cycle is completed at operation S30.

Also, once the cooling cycle is completed, the controller 50 drives the refrigerator compartment fan 16 for a period at operation S32, and controls the refrigerator compartment damper 18 to be opened, and the auxiliary damper 26 to be closed, during the frost removal cycle at operation S34.

Also, if it was determined at operation S14 that the refrigerator compartment 7, the freezer compartment 5, and the auxiliary storage 9 did not require the cooling cycle, operations S32 and S34 are still implemented.

After completion of the frost removal cycle, the operations described above are repeated from operation S12.

In a known refrigerator using an individual cooling method, the size of the refrigerator compartment evaporator is about 1/3 the size of the freezer compartment evaporator. However, the refrigerator compartment evaporator according the embodiments of the present invention has a size that is similar to or bigger than the size of the freezer compartment evaporator.

Another reason to provide the size of the refrigerator compartment evaporator described above is to prevent the pre-set temperature of the freezer compartment from being reached before the temperature of the auxiliary storage is reached.

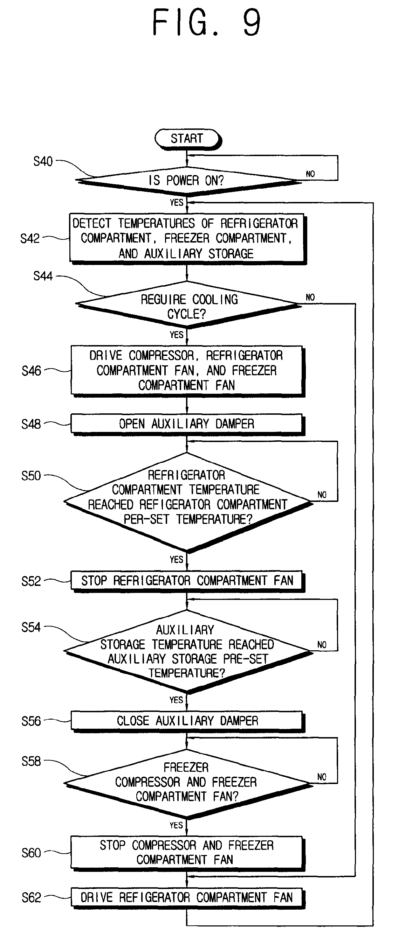

Referring to Figure 9, if the refrigerator 1 is "on", the controller 50 initializes the respective components of the cooling cycle based a stored operation program. Accordingly, the auxiliary damper 66 is closed and the compressor 38, refrigerator compartment fan 16, and the freezer compartment fan 12 are stopped. This is described at operation S40.

At operation S42, the controller 50 detects the refrigerator compartment temperature, the freezer compartment temperature, and the auxiliary storage temperature using the refrigerator compartment temperature detector 32, the freezer compartment temperature detector 34, and the auxiliary storage temperature detector 36, respectively.

At operation S44, the controller 50 determines whether at least one of the refrigerator compartment 7, the freezer compartment 5, and the auxiliary storage 9 requires cooling. This is achieved by comparing the refrigerator compartment temperature, the freezer compartment temperature, and the auxiliary storage temperature with the refrigerator compartment pre-set (desired) temperature, the freezer compartment pre-set (desired) temperature, and the auxiliary storage pre-set (desired) temperature, respectively.

If the refrigerator compartment, freezer compartment or auxiliary storage temperature is higher than the refrigerator compartment, freezer compartment or auxiliary storage pre-set (desired) temperature, respectively, the controller 50 determines that a cooling cycle operation should be carried out.

However, as shown in the control flow chart in Figure 9, it is clearly illustrated that operation S46 follows operation S44 when all of the refrigerator compartment 7, the freezer compartment 5, and the auxiliary storage 9 require cooling, while operation S62 follows operation S44 when cooling of the compartments are completed and are not required anymore. Therefore, the case that only the refrigerator compartment 7 or the auxiliary storage 9 requires cooling, or a case that only the freezer compartment 5 requires cooling is not illustrated.

At operation S46, after it is determined that the refrigerator compartment 7, the freezer compartment 5, and the auxiliary storage 9 require cooling , the controller 50 controls the compressor driver 40, the refrigerator compartment fan driver 42, and the freezer compartment fan driver 44 to drive the compressor 38, the refrigerator compartment fan 16, the freezer compartment fan 12, respectively.

At operation S48, the controller 50 opens the auxiliary damper 66 (which is initially closed) so that the cooling air which circulates in the freezer compartment 5 using the freezer compartment fan 12, is supplied into the auxiliary storage 9. Accordingly, the auxiliary storage 9 is cooled.

If the temperature detected by the refrigerator compartment temperature detector 32 is determined to be at the pre-set temperature of the refrigerator compartment 7, the controller 50 controls the refrigerator compartment fan driver 42 to stop the refrigerator compartment fan 16 at operations S50 and S52.

If the temperature of the auxiliary storage 9 detected by the auxiliary storage temperature detector 36 is determined to have reached the pre-set temperature of the auxiliary storage 9, the controller 50 controls the auxiliary damper 66 to be closed at operations S54 and S56. It is noted that the order in which operations S50 and S52, and operations S54 and S56 take place, may be reversed.

Also, the controller 50 determines whether the temperature of the individually cooled freezer compartment 5 is at the freezer compartment pre-set temperature at operation S58. If the freezer compartment temperature is determined to be at the pre-set temperature, the controller 50 controls the compressor 38 and the freezer compartment fan 12 to be stopped. Hence, the cooling cycle is completed at operation S60.

Also, once the cooling cycle is completed, the controller 50 drives the refrigerator compartment fan 16 for a period of time to implement the frost removal cycle at operation S62.

Also, even if the refrigerator compartment 7, the freezer compartment 5, and the auxiliary storage 9 are determined, at operation S44, not require the cooling cycle, operation S62 is still implemented.

After completion of the frost removal cycle, the operations described from operation S42 above are repeated.

To satisfy the temperature requirement of both the freezer compartment and the auxiliary storage, using the cooling air generated in the freezer compartment evaporator, an embodiment of the invention uses a freezer compartment evaporator which is bigger than that of a known freezer compartment evaporator implementing the individual cooling method.

As is described above, the refrigerator according to the embodiments of the present invention cools the auxiliary storage efficiently by providing an auxiliary supply duct branched off from one of a freezer compartment main duct and a refrigerator compartment main duct. The refrigerator supplies cooling air, which is transferred using corresponding fans to an auxiliary storage. An auxiliary returning duct returns the cooling air from within the auxiliary storage to a corresponding main duct. An auxiliary damper, in at least one of the auxiliary supply duct and the auxiliary returning duct, opens and closes to supply or block the cooling air from the auxiliary storage.

As is described above, the present invention provides a refrigerator and a method of controlling the same cooling an auxiliary storage efficiently.

Although a few embodiments of the present invention have been shown and described, it would be appreciated by those skilled in the art that changes may be made in these embodiments without departing from the invention.

## Claims

1. A refrigerator (1) comprising:
a first compartment (5, 7) for freezing or refrigeration;
an auxiliary compartment (9), such as a crisper or vegetable compartment; and
a heat pump (12, 16) for providing cooled air to the first and second compartments,
**characterised in that**
the flow of cooled air from the heat pump (12, 16) to the auxiliary compartment (9) is controllable independently of the flow of cooled air from the heat pump (12, 16) to said first compartment (5, 7).

2. A refrigerator (1) according to claim 1, wherein including first and second forward cooled air flow paths between the heat pump (12, 16) and respectively the first and auxiliary compartments (5, 7, 9), the second forward flow path including flow control means (26).

3. A refrigerator (1) according to claim 2, wherein the first and second forward flow paths are branches of a multifurcated path from the heat pump (16).

4. A refrigerator according to claim 1, 2 or 3, including first and second return air flow paths from respectively the first and auxiliary compartments (5, 7, 9) towards the heat pump (12, 16).

5. A refrigerator according to claim 4, including flow control means (26) in the second return air flow path.

6. A method of controlling a refrigerator according to any one of claims 1 to 5, the method comprising:
detecting the temperature in at least one of the first compartment (5, 7) or the auxiliary compartment (9); and
controlling the flow of cooled air from the heat pump (12, 16) to the auxiliary compartment (9) in accordance with the detected temperature.

7. A method according to claim 6, comprising:
stopping the flow of cooled air from the heat pump (12, 16) to the auxiliary compartment (9) when the detected temperature is at a specified temperature.

8. A method according to claim 7, wherein when the auxiliary compartment (9) is at a specified temperature, the method comprising:
allowing air to flow from the auxiliary compartment (9) to the first compartment (5, 7).

9. A refrigerator comprising a main body forming a refrigerator compartment and a freezer compartment, each of a freezer compartment main duct and a refrigerator compartment main duct including at least one exiting hole and one returning hole communicating respectively with the freezer compartment and the refrigerator compartment, a freezer compartment evaporator and a refrigerator compartment evaporator in the freezer compartment main duct and the refrigerator compartment main duct, respectively, to generate cooling air, and a freezer compartment fan and a refrigerator compartment fan provided in the freezer compartment main duct and the refrigerator compartment main duct, respectively, to let out the cooling air generated in the freezer compartment evaporator and the refrigerator compartment evaporator, respectively, through the exiting hole and to return the cooling air in the freezer compartment and the refrigerator compartment through the returning hole, the refrigerator comprising:
an auxiliary storage in the main body;
an auxiliary supply duct, which is branched off from one of the freezer compartment main duct and the refrigerator compartment main duct, to supply the cooling air, which is transferred by a corresponding fan to the auxiliary storage; an auxiliary returning duct to return the cooling air in the auxiliary storage to a corresponding main duct; and
an auxiliary damper included in at least one of the auxiliary supply duct and the auxiliary returning duct, to open and close to respectively supply block the cooling air to the auxiliary storage.

10. The refrigerator according to claim 9, further comprising a refrigerator compartment damper, in the refrigerator compartment main duct, to open and close to respectively supply and block the cooling air to the refrigerator compartment.

11. The refrigerator according to claim 10, further comprising:
a refrigerator compartment temperature detector to detect a temperature in the refrigerator compartment;
a refrigerator compartment fan driver to drive the refrigerator compartment fan;
an auxiliary damper driver and a refrigerator compartment damper driver to respectively drive the auxiliary damper and the refrigerator compartment damper in at least one of the auxiliary supply duct and the auxiliary returning duct, which communicates with the refrigerator compartment main duct; and
a controller to control the refrigerator compartment fan driver, the refrigerator compartment damper driver, and the auxiliary damper driver such that a refrigerator compartment temperature reaches a refrigerator compartment pre-set temperature by driving the refrigerator fan, opening the refrigerator compartment damper, and closing the auxiliary damper, if the refrigerator compartment temperature detected by the refrigerator compartment temperature detector is higher than the refrigerator compartment pre-set temperature.

12. The refrigerator according to claim 11, further comprising an auxiliary storage temperature detector to detect a temperature in the auxiliary storage, wherein the controller controls the refrigerator compartment damper driver and the auxiliary damper driver to make the temperature of the auxiliary storage reach an auxiliary storage pre-set temperature by closing the refrigerator compartment damper, and opening the auxiliary damper, if the temperature of the auxiliary storage detected by the auxiliary storage temperature detector is higher than the auxiliary storage pre-set temperature.

13. The refrigerator according to claim 12, wherein the controller controls a cooling cycle in an order of the refrigerator compartment and the auxiliary storage, if the refrigerator compartment temperature and the temperature of the auxiliary storage detected by the refrigerator compartment temperature detector and the auxiliary storage temperature detector, respectively, are determined to be higher than the refrigerator compartment pre-set temperature and the auxiliary storage pre-set temperature.

14. The refrigerator according to claim 13, wherein the controller controls the refrigerator compartment fan driver, the refrigerator compartment damper driver, and the auxiliary damper driver to stop the driving of the refrigerator compartment fan and to close the refrigerator compartment damper and the auxiliary damper, if the refrigerator compartment temperature, detected by the refrigerator compartment temperature detector, is determined to have reached the refrigerator compartment pre-set temperature and the temperature of the auxiliary storage, detected by the auxiliary storage temperature detector, is determined to have reached the auxiliary storage pre-set temperature.

15. The refrigerator according to claim 14, wherein the controller controls the refrigerator compartment fan driver, the refrigerator compartment damper driver, and the auxiliary damper driver to respectively drive the refrigerator compartment fan, open the refrigerator compartment damper, and close the auxiliary damper, if the cooling cycles of the freezer compartment, the refrigerator compartment, and the auxiliary storage are determined to have been completed and a frost removal cycle should be implemented.

16. The refrigerator according to claim 9, further comprising:
an auxiliary storage temperature detector to detect a temperature in the auxiliary storage;
a freezer compartment fan driver to drive the freezer compartment fan;
an auxiliary damper driver to drive the auxiliary damper provided in at least one of the auxiliary supply duct and the auxiliary returning duct, which communicates with the freezer compartment main duct; and
a controller to control the freezer compartment fan driver and the auxiliary damper driver such that the temperature of the auxiliary storage reaches an auxiliary storage pre-set temperature by driving the freezer compartment fan and opening the auxiliary damper, if the temperature of the auxiliary storage detected by the auxiliary storage temperature detector is higher than the auxiliary storage pre-set temperature.

17. The refrigerator according to claim 16, wherein the controller controls the auxiliary damper driver to close the auxiliary damper, if the temperature of the auxiliary storage detected by the auxiliary storage temperature detector is determined to have reached the auxiliary storage pre-set temperature.

18. The refrigerator according to claim 17, further comprising the refrigerator compartment fan driver to drive the refrigerator compartment fan, wherein the controller controls the refrigerator compartment fan driver to drive the refrigerator compartment fan, if the cooling cycles of the freezer compartment, the refrigerator compartment, the auxiliary storage are determined to have been completed and the frost removal cycle should be implemented.

19. A method of controlling a refrigerator comprising a main body forming a refrigerator compartment and a freezer compartment, each of a freezer compartment main duct and a refrigerator compartment main duct including at least one exiting hole and one returning hole communicating respectively with the freezer compartment and the refrigerator compartment, a freezer compartment evaporator and a refrigerator compartment evaporator in the freezer compartment main duct and the refrigerator compartment main duct, respectively, to generate cooling air, and a freezer compartment fan and a refrigerator compartment fan in the freezer compartment main duct and the refrigerator compartment main duct, respectively, to let out the cooling air generated in the freezer compartment evaporator and the refrigerator compartment evaporator through the exiting hole and to return the cooling air in the freezer compartment and the refrigerator compartment through the returning hole, comprising:
providing an auxiliary storage in the main body, having an auxiliary supply duct branched off from one of the freezer compartment main duct and the refrigerator compartment main duct, to supply the cooling air transferred by a corresponding fan to the auxiliary storage, an auxiliary returning duct returning the cooling air in the auxiliary storage to a corresponding main duct, and an auxiliary damper to open and close to respectively supply and block the cooling air to the auxiliary storage in at least one of the auxiliary supply duct and the auxiliary returning duct;
detecting a temperature in the auxiliary storage;
opening the auxiliary damper, if the detected temperature of the auxiliary storage is higher than an auxiliary storage pre-set temperature; and
closing the auxiliary damper, if the temperature of the auxiliary storage is determined to have reached the auxiliary storage pre-set temperature.

20. The method of controlling the refrigerator according to claim 19, further comprising:
providing a refrigerator compartment damper to open and close in the refrigerator compartment main duct in advance to respectively supply and block the cooling air to the refrigerator compartment;
detecting a temperature of the refrigerator compartment; and
making the refrigerator compartment temperature reach an refrigerator compartment pre-set temperature by driving the refrigerator compartment fan, opening the refrigerator compartment damper, and closing an auxiliary damper in at least one of an auxiliary supply duct and auxiliary returning duct communicating with the refrigerator compartment main duct, if the refrigerator compartment temperature is higher than the refrigerator compartment pre-set temperature.

21. The method of controlling the refrigerator according to claim 20, further comprising making the temperature of the auxiliary storage reach an auxiliary storage pre-set temperature by closing the refrigerator compartment damper and opening the auxiliary damper, if a temperature of the auxiliary storage is determined to be higher than the auxiliary storage pre-set temperature.

22. The method of controlling the refrigerator according to claim 21, further comprising controlling a cooling cycle in an order of the refrigerator compartment and the auxiliary storage, if the refrigerator compartment temperature and the temperature of the auxiliary storage are determined to be higher than the refrigerator compartment pre-set temperature and the auxiliary storage pre-set temperature.

23. The method of controlling the refrigerator according to claim 22, further comprising driving the refrigerator compartment fan and closing the refrigerator compartment damper and the auxiliary damper, if the refrigerator compartment temperature is determined to have reached the refrigerator compartment pre-set temperature and the detected temperature of the auxiliary storage is determined to have reached the auxiliary storage pre-set temperature.

24. The method of controlling the refrigerator according to claim 23, further comprising driving the refrigerator compartment fan, opening the refrigerator compartment damper, and closing the auxiliary damper, if the cooling cycles of the freezer compartment, the refrigerator compartment, and the auxiliary storage are determined to have been completed and a frost removal cycle should be implemented.

25. The method of controlling the refrigerator according to claim 19, further comprising making the temperature of the auxiliary storage reach the auxiliary storage pre-set temperature by driving the freezer compartment fan and opening the auxiliary damper in at least one of the auxiliary supply duct and the auxiliary returning duct communicating with the freezer compartment main duct, if the detected temperature of the auxiliary storage is higher than the auxiliary storage pre-set temperature.

26. A refrigerator, including a refrigerator compartment and a freezer compartment, and main ducts in the freezer compartment and the refrigerator compartment each having at least one exiting hole and one returning hole to communicate with the freezer compartment and the refrigerator compartment, an evaporator to generate cooling air which circulates through the exiting and the returning holes, refrigerator comprising:
an auxiliary storage;
an auxiliary supply duct branching from one of the main ducts to supply the cooling air to the auxiliary storage;
an auxiliary returning duct to return the cooling air in the auxiliary storage to a main duct; and
an auxiliary damper, in at least one of the auxiliary supply duct and the auxiliary returning duct, to regulate the circulation of the cooling air to the auxiliary storage.

27. The refrigerator according to claim 26, further comprising a refrigerator compartment damper, in the refrigerator compartment main duct, to regulate the circulation of the cooling air to the refrigerator compartment.

28. The refrigerator according to claim 27, further comprising a refrigerator compartment temperature detector to detect a temperature in the refrigerator compartment.

29. The refrigerator according to claim 28, further comprising:
a refrigerator compartment fan to circulate cooling air in the refrigerator compartment main duct; and
a refrigerator compartment fan driver to drive the refrigerator compartment fan.

30. The refrigerator according to claim 29, further comprising:
an auxiliary damper driver to drive the auxiliary damper; and
a refrigerator compartment damper driver to drive the refrigerator compartment damper.

31. The refrigerator according to claim 30, further comprising a controller to control the refrigerator compartment fan driver, the refrigerator compartment damper driver, and the auxiliary damper driver such that a refrigerator compartment temperature reaches a refrigerator compartment pre-set temperature, if the refrigerator compartment temperature is determined to be higher than a preset temperature.

32. The refrigerator according to claim 31, wherein the controller drives the refrigerator compartment fan, opens the refrigerator compartment damper, and closes the auxiliary damper.

33. The refrigerator according to claim 31, further comprising an auxiliary storage temperature detector to detect a temperature in the auxiliary storage.

34. The refrigerator according to claim 33, wherein the controller controls the refrigerator compartment damper driver and the auxiliary damper driver such that a temperature of the auxiliary storage reaches a pre-set temperature.

35. The refrigerator according to claim 34, wherein the controller closes the refrigerator compartment damper and opens the auxiliary damper, if the detected temperature of the auxiliary storage is higher than the pre-set temperature.

36. The refrigerator according to claim 35, wherein the controller controls a cooling cycle in which the refrigerator compartment is controlled first and the auxiliary storage is controlled second, if the temperatures of the refrigerator compartment and the auxiliary storage are determined to be higher than the pre-set temperatures thereof.

37. The refrigerator according to claim 36, wherein the controller controls the refrigerator compartment fan driver, the refrigerator compartment damper driver, and the auxiliary damper driver to stop the driving of the refrigerator compartment fan and to close the refrigerator compartment damper and the auxiliary damper, if the detected refrigerator compartment temperature and the detected temperature of the auxiliary storage reach the pre-set temperatures thereof.

38. The refrigerator according to claim 37, wherein the controller controls the refrigerator compartment fan driver, the refrigerator compartment damper driver, and the auxiliary damper driver to drive the refrigerator compartment fan, to open the refrigerator compartment damper, and to close the auxiliary damper, if the cooling cycles of the freezer compartment, the refrigerator compartment, and the auxiliary storage are determined to be completed.

39. A method of controlling a refrigerator, including a refrigerator compartment and a freezer compartment, and main ducts in the freezer compartment and the refrigerator compartment each having at least one exiting hole and one returning hole to communicate with the freezer compartment and the refrigerator compartment, an evaporator to generate cooling air which circulates through the exiting and the returning holes, the method comprising:
providing an auxiliary storage having an auxiliary supply duct branching from one of the main ducts to supply the cooling air to the auxiliary storage, an auxiliary returning duct returning the cooling air to one of the main ducts, and an auxiliary damper to supply and block the cooling air to the auxiliary storage in at least one of the auxiliary supply duct and the auxiliary returning duct;
detecting a temperature in the auxiliary storage;
opening the auxiliary damper, if the detected temperature of the auxiliary storage is higher than a pre-set temperature; and
closing the auxiliary damper, if the temperature of the auxiliary storage is determined to have reached the pre-set temperature.

40. The method of controlling the refrigerator according to claim 39, further comprising:
providing a refrigerator compartment damper opening/closing in the refrigerator compartment main duct in advance to supply or block the cooling air to the refrigerator compartment;
detecting a temperature of the refrigerator compartment; and
making the refrigerator compartment temperature reach an refrigerator compartment pre-set temperature by driving the refrigerator compartment fan, opening the refrigerator compartment damper, and closing an auxiliary damper provided in at least one of an auxiliary supply duct and auxiliary returning duct communicating with the refrigerator compartment main duct, if the refrigerator compartment temperature is higher than the refrigerator compartment pre-set temperature.

41. The method of controlling the refrigerator according to claim 40, further comprising making the temperature of the auxiliary storage reach an auxiliary storage pre-set temperature by closing the refrigerator compartment damper and opening the auxiliary damper, if a temperature of the auxiliary storage is determined to be higher than the auxiliary storage pre-set temperature.

42. The method of controlling the refrigerator according to claim 41, further comprising controlling a cooling cycle in an order of the refrigerator compartment and the auxiliary storage, if the refrigerator compartment temperature and the temperature of the auxiliary storage are determined to be higher than the refrigerator compartment pre-set temperature and the auxiliary storage pre-set temperature.
